# EUROPEAN PATENT APPLICATION

(11) **EP 3 056 766 A2**
(43) Date of publication of application: **17.08.2016**
(21) Application number: 16155994.3
(22) Date of filing: 16.02.2016
(51) Int. Cl.: F16H 55/17

(54) **SPIRAL BEVEL AND PINION GEAR**

(30) Priority: 16.02.2015 US 201514623305
(71) Applicant: Hamilton Sundstrand Corporation, Charlotte, NC 28217-4578 (US)
(72) Inventor: FOX, Paul F., Loves Park, Illinois 61111 (US)
(74) Representative: Leckey, David Herbert

(57) **Abstract**

A gear set is provided for use in a gearbox. The gear set includes a first bevel gear (120) having a first rotational axis (A₁) and a second bevel gear (130) having a second rotational axis (A₂). The second gear (130) is driven by the first gear (120). The first gear (120) has an outside diameter (148) of about 5.1924 inches (13.1887 cm), an outer cone distance (152) of about 4.3738 inches (11.1095 cm), a face width of about 1.31 inches (3.33 cm), and a ratio of the outside diameter (148) to a length (150) parallel to the axis of rotation (A₁) between a crown and a pitch apex (140) of about 1.47. The second gear (130) has an outside diameter (180) of about 7.3363 inches (18.6342 cm), an outer cone distance of about 4.3738 inches (11.1095 cm), a face width of about 1.31 inches (3.33 cm), and a ratio of the outside diameter (180) to a length (150) parallel to the axis of rotation (A₂) between the crown and the pitch apex (140) of about 3.08.

## Description

### FIELD

The subject matter disclosed herein relates to a gear assembly and, more particularly, to a two-piece bevel gear assembly for use in a gear box.

### BACKGROUND

Misalignment of the gears within a gear train relative to a shaft, bearings, or other components, may increase wear and stress on the gears and contribute to a reduction in gear durability. For instance, axial misalignment of the gears may cause uneven wear of the gear teeth and eventually necessitate replacement. Therefore, bevel gears require a tooth profile uniquely customized for each application to ensure proper tooth contact between meshing gears. Unique tailoring of the gear tooth profiles will limit the effects of movement, tolerance, and thermal expansion on the gear interface.

### SUMMARY

According to one embodiment of the invention, a gear is provided including a generally conical base having an inner end and an outer end at two different positions along a rotational axis. A plurality of teeth extends from the surface of the base between the inner end and the outer end. Each tooth has a root, a pitch, and a face. The outside diameter of the gear is about 5.1924 inches (13.1887 cm). The outer cone distance of the gear is about 4.3738 inches (11.1095 cm). The face width of the gear is about 1.31 inches (3.33 cm).

According to another embodiment of the invention, a gear is provided including a generally conical base having an inner end and an outer end at two different positions along a rotational axis. A plurality of teeth extends from the surface of the base between the inner end and the outer end. Each tooth has a root, a pitch, and a face. The outside diameter of the gear is about 5.1924 inches (13.1887 cm). The outer cone distance of the gear is about 4.3738 inches (11.1095 cm). The face width of the gear is about 1.31 inches (3.33 cm). The ratio of the outside diameter to a length parallel to the axis of rotation between the crown and the pitch apex of about 1.47.

According to yet another embodiment of the invention, a gear set is provided including a first bevel gear having a first rotational axis and a second bevel gear having a second rotational axis. The second gear can be driven by the first gear or the first gear can be driven by the second gear. The outside diameter of the first gear is about 5.1924 inches (13.1887 cm). The outside diameter of the second gear is about 7.3363 inches (18.6342 cm). The outer cone distance of both the first gear and the second gear is about 4.3738 inches (11.1095 cm) and the face width of both the first gear and the second gear is about 1.31 inches (3.33 cm). The ratio of the outside diameter to a length parallel to the axis of rotation between the crown and the pitch apex of about 3.08.

According to yet another embodiment of the invention, a method is provided for installing a gear set in a gearbox of an aircraft including mounting a first gear on a first shaft. A second gear is mounted in meshing engagement with the first gear to a second shaft driven by the first shaft. The first gear has an outside diameter of about 5.1924 inches (13.1887 cm) and the second gear has an outside diameter of about 7.3363 inches (18.6342 cm). The first gear and second gear have a ratio of the outside diameter to a length parallel to the axis of rotation between the crown and the pitch apex of about 1.47 and about 3.08, respectively. The first gear and second gear have an outer cone distance of about 4.3738 inches (11.1095 cm) and a face width of about 1.31 inches (3.33 cm).

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 illustrates a cross-sectional view of an exemplary gearbox with a gear assembly according to an embodiment of the invention;
FIG. 2 is a perspective view of the gear assembly of FIG. 1 according to an embodiment of the invention;
FIG. 3 is a cross-sectional view of the gear assembly of FIG. 1 according to an embodiment of the invention;
FIG. 4 is a cross-sectional view of the first gear in the gear assembly of FIG. 1 according to an embodiment of the invention;
FIG. 5 is a cross-sectional view of the second gear in the gear assembly of FIG. 1 according to an embodiment of the invention; and
FIG. 6 is an elevation view of the first gear of FIG. 4;
FIG. 7 is an elevation view of the second gear of FIG. 5;
FIG. 8 is a planar view of the mated gear set according to an embodiment of the invention;
FIG. 9 is a contact pattern check of the gear set according to an embodiment of the invention; and
FIG. 10 is an ease-off grid of the normalized tooth profile of the gear set according to an embodiment of the invention.

The detailed description explains embodiments of the invention, together with advantages and features, by way of example with reference to the drawings.

### DETAILED DESCRIPTION

Embodiments of a bevel gear assembly disclosed herein include a first gear coupled to a second gear in a gearbox. Further embodiments are directed to the first and second gears separately.

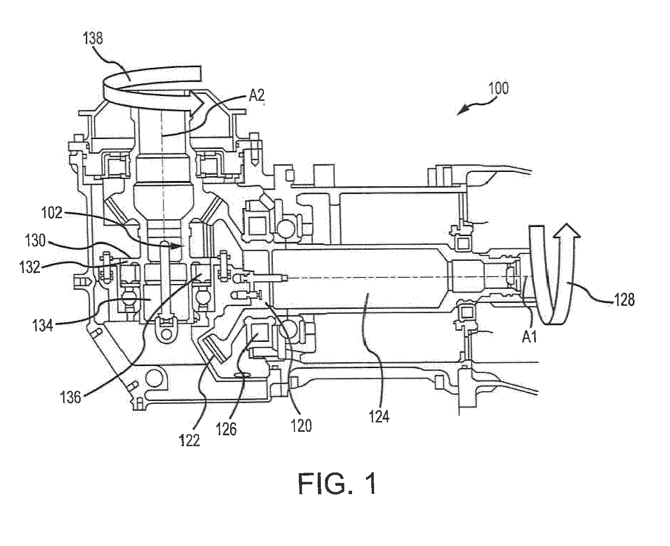

Referring to the drawings, FIG. 1 illustrates an exemplary gearbox 100. The gearbox 100 may be attached to an engine (e.g., a turbine engine) and includes a gear set 102 as part of a gear train for driving any of a number of accessories such as a fuel pump, generator, hydraulic pump, and deoiler, for example. In one embodiment, the gear set 102 includes a first gear 120 (also referred to as a "pinion") coupled to a second gear 130, and the tolerances for gears 120, 130 are defined by guidelines established by the American Gear Manufacturers Association (AGMA) for a specific class of gear. The gearbox 100 includes an engine shaft 124 that rotates about a first axis A1 and is supported by at least one bearing assembly 126. In one example, the engine shaft 124 may receive rotational power from an engine such as a turbine engine on an aircraft. The engine shaft 124 supports the first gear 120 that is engaged with the second gear 130. The second gear 130 is supported within the gearbox 100 by a second shaft 134 rotatable about an axis A2 transverse to the engine shaft 124. The second shaft 134 is supported by at least one bearing assembly 136.

The first gear 120 and the second gear 130 mesh to provide the desired transmission of power from the engine shaft 124 to the second shaft 134 and finally to the associated accessories. In one embodiment, rotation of the engine shaft 124 in the direction indicated by arrow 128 causes rotation of the second shaft 134 in the direction of arrow 138. The first gear 120 includes a plurality of teeth 122 that engage a plurality of teeth 132 of the second gear 130. The number of teeth on each of the first gear 120 and the second gear 130 can be selected to provide a desired speed of the second shaft 134, responsive to the input of the engine shaft 124, to drive the accessories. In one embodiment, the first gear 120 has 32 teeth and the second gear 130 includes 47 teeth. In another embodiment, the number of teeth on the first gear 120 and the second gear 130 may vary. Also, variations in part fabrication and assembly can result in some relative movement between the first gear 120 and the second gear 130. Consequently, such movements and variations are accommodated in the design of the mating interface between the first and second gears 120, 130.

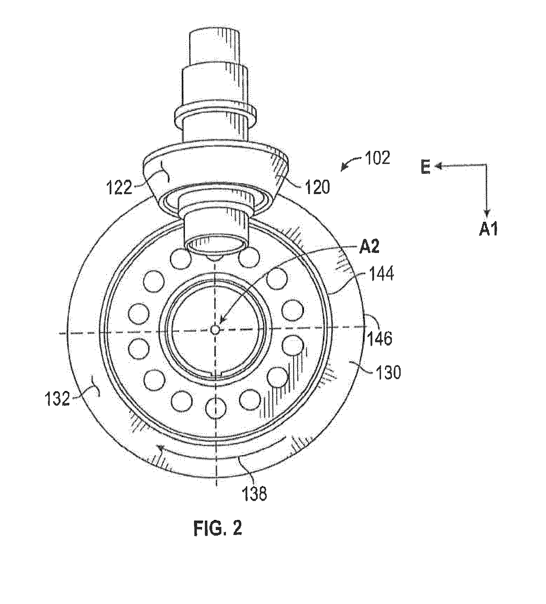

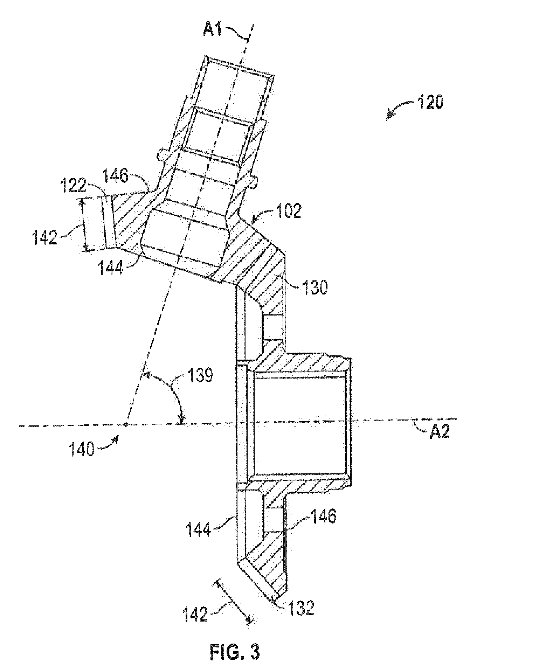

Referring now to FIGS. 2 and 3, the first gear 120 and the second gear 130 forming gear set 102 are shown in relation to each other without their respective shafts 124, 134 (FIG. 1) for clarity. The first gear 120 and second gear 130 are generally conical in shape based on an axis, A1 and A2 respectively, that serves as a rotational center.

Each gear 120, 130 has a small diameter end section and a large diameter end section at two different positions along their rotational axes A1, A2, respectively. The small diameter end section forms the toe 144 of the teeth and the large diameter end section of a gear forms the heel 146 of the teeth. The teeth 122 of the first gear 120 and the teeth 132 of the second gear 130 each share a common face width 142. The face width 142 is the length taken along the pitch P of the gear teeth 122, 132 of each of the first gear 120 and the second gear 130. In one embodiment, the face width 142 of both the first gear 120 and the second gear 130 is about 1.31 inches, or about 3.327 centimeters. It shall be understood that while the face width 142 is illustrated as being the same in both the first and second gears 120, 130, each could have a unique width.

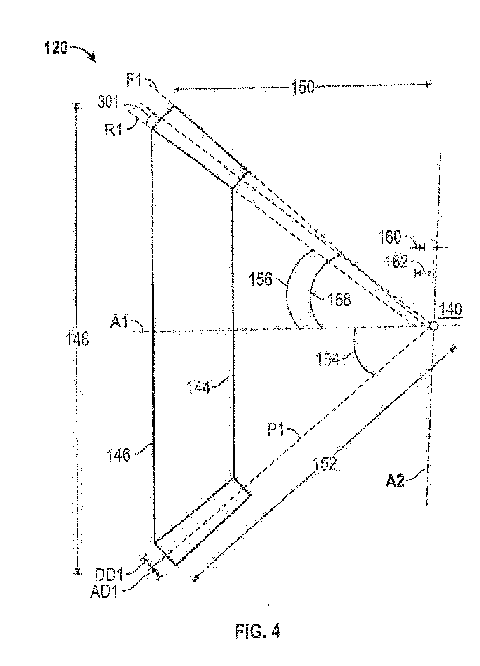

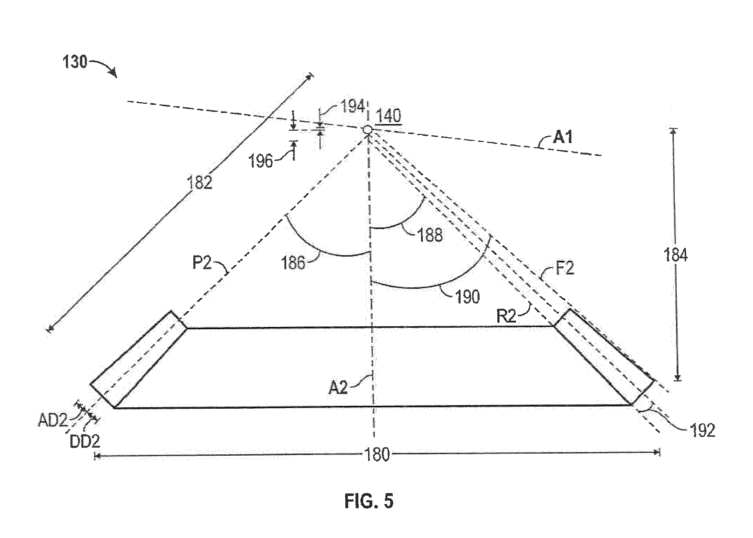

The pitch apex 140 (also shown in FIGS. 4 and 5) of the gear set 102 is the point where the axis A1 of the engine shaft 124 (FIG. 1) and the axis A2 of the second shaft 134 (FIG. 1) intersect. Each of the first gear 120 and the second gear 130 are mounted a distance from the pitch apex 140. The mounting distance is a function of the required meshing between the teeth of each of the first gear 120 and the second gear 130. The mounting distance is also a function of the angular relationship between the engine shaft 124 (FIG. 1) and the second shaft 134 (FIG. 1). The engine shaft (FIG. 1) rotates about axis A1 at an angle 139 relative to the axis A2 of the second shaft 134 (FIG. 1). In the illustrated example, the angle 139 is about 90 degrees.

A cross-sectional view is shown for both the first gear 120 and the second gear 130 in FIGS. 4 and 5, respectively. Each of the first gear 120 and the second gear 130 has a length parallel to the axis of rotation between a crown of the gear and the pitch apex 140. In this example, the first gear 120 includes a length 150 parallel to the axis of rotation A1 between pitch apex 140 and the crown, and the second gear 130 includes a length 184 parallel to the axis of rotation A2 between the pitch apex 140 and the crown. In one embodiment, the length 150 is approximately 3.5237 inches (8.9502 centimeters) and the length 184 is approximately 2.384 inches (6.055 centimeters). The first gear 120 has an outside diameter 148 and the second gear has an outside diameter 180. In one embodiment, the outside diameter 148 of the first gear 120 is about 5.1924 inches (about 13.1887 centimeters) and the outside diameter 180 of the second gear 130 is about 7.3363 inches (about 18.6342 centimeters). Alternately, each gear may be measured by the ratio of the outside diameter to the length parallel to the axis of rotation between the crown and the pitch apex. In one embodiment, this ratio for the first gear 120 is about 1.47 and for the second gear 130 is about 3.08. Both the first gear 120 and the second gear 130 also have an outer cone distance extending from the crown to the pitch apex 140 parallel to the pitch cone P. In this example, the first gear 120 has an outer cone distance 152 and the second gear 130 has an outer cone distance 182 which are equal and about 4.3738 inches (about 11.1095 centimeters).

Gears 120, 130 include respective root cones R1, R2 extending along the conical root of a tooth and respective face cones F1, F2 extending along the conical face of a tooth. The root cones R1, R2 and face cones F1, F2 intersect the respective rotational axes A1, A2 of the respective gears 120, 130 to form a root angle and a face angle. In one embodiment, the first gear 120 has a root angle 156 of about 32.99 degrees and a face angle 158 of about 36.76 degrees. The second gear 130 has a root angle 188 of about 53.24 degrees and a face angle 190 of about 57.01 degrees. Each gear 120, 130 has a respective pitch axis P1, P2 that forms an angle with the respective rotational axes A1, A2 of each respective gear 120, 130. In one embodiment, the pitch angle 154 of the first gear 120 is about 34.25 degrees and the pitch angle 186 of the second gear 130 is about 55.75 degrees.

The location where each respective root cone R1, R2 and each respective face cone F1, F2 intersects a respective rotational axis A1, A2 can be measured as a distance from the pitch apex 140. For the first gear 120, the crossing point of the root cone R1 is a distance 162 from pitch apex 140 and the crossing point of the face cone F1 is a distance 160 from pitch apex 140. Distance 196 is the distance between the pitch apex 140 and the crossing point of the root cone R2 and length 194 is the distance between pitch apex 140 and the crossing point of the face cone F2 of the second gear 130. In one embodiment, distance 162, where the root cone R1 crosses axis A1, is about .0492 inches (about 0.1250 centimeters) before the pitch apex 140 and distance 160, where the face cone F1 crosses axis A1, is about .0481 inches (about 0.1222 centimeters) before the pitch apex 140. Similarly, the distance 196, where root cone R2 crosses rotational axis A2, is about 0.0001 inches (about 0.0002 centimeters) before the pitch apex 140 and the distance 194, where the face cone F2 crosses axis A2, is about .0025 inches (about 0.0064 centimeters) past the pitch apex 140. In this example, the pitch axes P1, P2 for both the first and second gear 120, 130 cross the respective rotational axes A1 and A2 through the pitch apex 140.

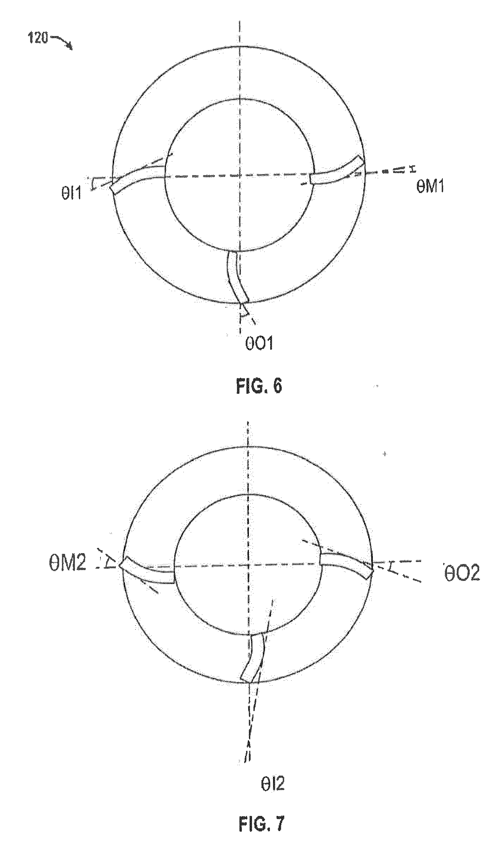

FIGS. 6 and 7 depict elevation views of the first gear 120 and the second gear 130. In one embodiment, the first gear 120 and the second gear 130 are bevel gears having complementary spiral teeth. As such, the teeth 122 of the first gear 120 may have a left-handed spiral and the teeth 132 of the second gear 130 may have a right-handed spiral. A spiral angle is the angle of a gear tooth relative to the pitch cone and is selected to provide a desired length of contact balanced with the thrust load generated by the torque on each gear. The spiral angle may be measured at various points along the face of the tooth. For example, the outer spiral angle, *θ_{O}*, is measured at the outer cone distance, the inner spiral angle, θ*_{I}*, is measured at the inner cone distance, and the mean spiral angle, *θ_{M}*, is measured at the mean cone distance. For the teeth of the first gear 120 and the second gear 130 to mate properly, the spiral angle is common to both the first gear 120 and the second gear 130. In one embodiment, the inner spiral angle θ*_{I}* is about 18.59 degrees, the outer spiral angle, θ*_{O}* is about 36.48 degrees and the mean spiral angle, θ*ₘ*, is about 27.5 degrees.

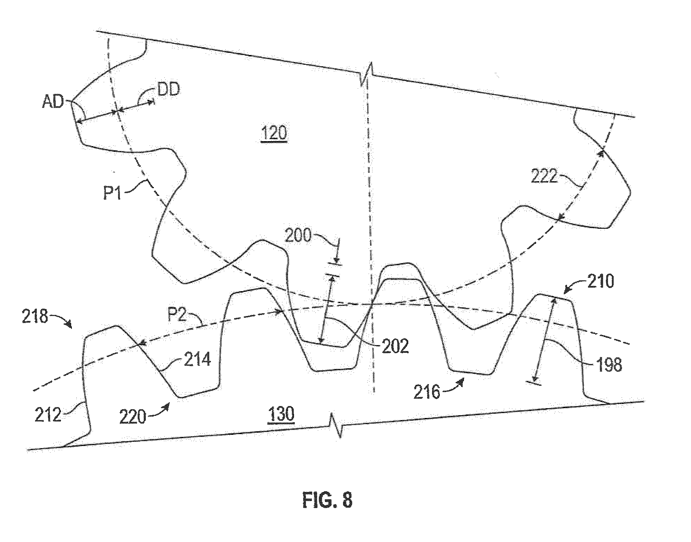

Referring now to FIG. 8, the whole depth 198 of a gear tooth is the distance from the root of the tooth to the face of the tooth. The whole depth 198 is equal to the sum of the length of the addendum AD and the length of the dedendum DD. In one embodiment, the first gear 120 and the second gear 130 have a whole depth of about 0.2856 inches (about 0.7254 centimeters). The dedendum DD of a gear is the radial distance from the root of a tooth to the pitch cone P as measured at the heel. The addendum AD is the radial distance from the pitch cone P to the face cone F of a tooth as measured at the heel. In one example, the first gear 120 has a dedendum DD1 of about 0.1227 inches (about 0.3117 centimeters) and an addendum AD1 of about of 0.1629 inches (about 0.4138 centimeters) and the second gear 130 has a dedendum DD2 of about 0.1918 inches (about 0.4872 centimeters) and an addendum of about 0.0938 inches (about 0.2383 centimeters). The clearance 200 of a gear is the distance between the root of a first gear 120 and the face of the second gear 130 when mated. In one embodiment, the first gear 120 and the second gear 130 have a clearance of about 0.0289 inches (about 0.0734 centimeters). The working depth 202 of a gear is the difference between the whole depth 198 of a gear and the clearance 200. Therefore, the working depth 202 of the first and second gear 120, 130 is about 0.2567 inches (about 0.6520 centimeters). The dedendum angle is the angle formed between the pitch cone P and the root cone R of a gear. In one embodiment, the dedendum angle 301 of the first gear 120 is about 1.26 degrees and the dedendum angle 192 of the second gear 130 is about 2.51 degrees.

Each tooth includes a topland 210, a convex tooth flank 212 and a concave tooth flank 214. Root cone 216 is continuously formed at the tooth root between the convex and concave flanks 212, 214 of adjacent teeth. In general, the topland 210 connects to the convex and concave tooth flanks 212, 214 by a tooth crest arc 218 and the concave and convex tooth flanks 212, 214 connect to the root cone 216 by a tooth root arc 220. The width of the topland 210 may vary along the length of the tooth. The width of the topland is measured at the toe, the heel, and halfway between the toe and the heel. In one embodiment, the first gear 120 has an inner topland, measured at the toe, of about 0.0796 inches (about 0.2022 centimeters), an outer topland, measured at the heel, of about 0.0736 inches (about 0.1869 centimeters) and a mean topland of 0.0756 inches (about 0.1920 centimeters). Similarly, the second gear 130 may have an inner topland, measured at the toe, of about 0.0841 inches (about 0.2136 centimeters), and an outer topland, measured at the heel, of about 0.0810 inches (about 0.2057 centimeters), and a mean topland of 0.0875 inches (approximately 0.2223 centimeters). The mean circular thickness 222 of a tooth is the average width of a tooth measured along the arc of the pitch circle. In one embodiment, the mean circular thickness 222 of the first gear 120 is approximately 0.2208 inches (approximately 0.5608 centimeters) and the second gear 130 is approximately 0.1741 inches (approximately 0.4422 centimeters).

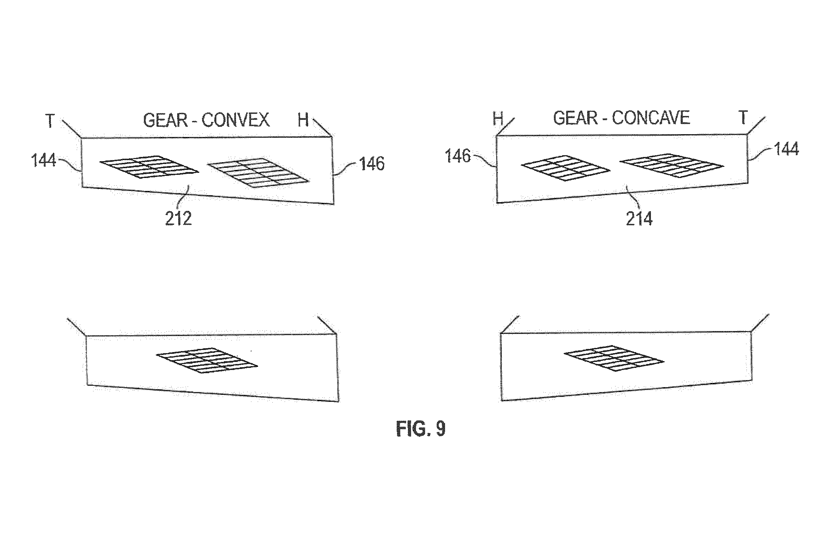

FIG. 9 illustrates a contact pattern check of the gear set 102 and the maximum amount that the first gear 120 may be moved relative to the second gear 130 to maintain sufficient contact for clean visual inspection. These maximum tolerances regarding the positioning of the first gear 120 relative to the second gear 130 are listed in Table 1.

**TABLE 1**

| IN * 1000 | MEAN | TOE | HEEL | TOTAL |
|---|---|---|---|---|
| CX E(V) | 0 | 10 | -42 | 52 |
| CX P(H) | 10 | 11 | 28 | 17 |
| CV E(V) | 0 | -13 | 66 | 79 |
| CV P(H) | -10 | -13 | -36 | 23 |

In one embodiment, when the first gear 120 is shifted about 0.010 inches (about 0.025 centimeters) along axis E (see FIG. 2) relative to the second gear, the first gear 120 contacts the convex flank 212 of the second gear 130 near the toe 144 of the second gear 130. Similarly, if the first gear 120 is shifted about -0.042 inches (about -0.1067 centimeters) along axis E and about 0.028 inches (about 0.0711 centimeters) along axis A1, the first gear 120 will contact the convex flank 212 of the second gear 130 near the heel 146 of the second gear 130. Shifting the first gear 120 about -0.013 inches (about -0.0330 centimeters) along the E axis and about -0.013 inches (about 0.0330 centimeters) along the A1 axis will cause the first gear 120 to contact the concave flank 214 of the second gear 130 near the toe 144 of the second gear 130. If the first gear 120 is shifted about 0.066 inches (about 0.0838 centimeters) along axis E, the first gear 120 will contact the concave flank 214 of the second gear 130 near the heel 146 of the second gear 130. If the first gear 120 is shifted about 0.066 inches (about 0.0838 centimeters) along axis E, and about -0.036 inches (about -0.0914 cm) along axis A1, the first gear 120 will contact the concave flank 214 of the second gear 130 near the heel 146 of the second gear 130. Various other translations are further indicated in Table 1.

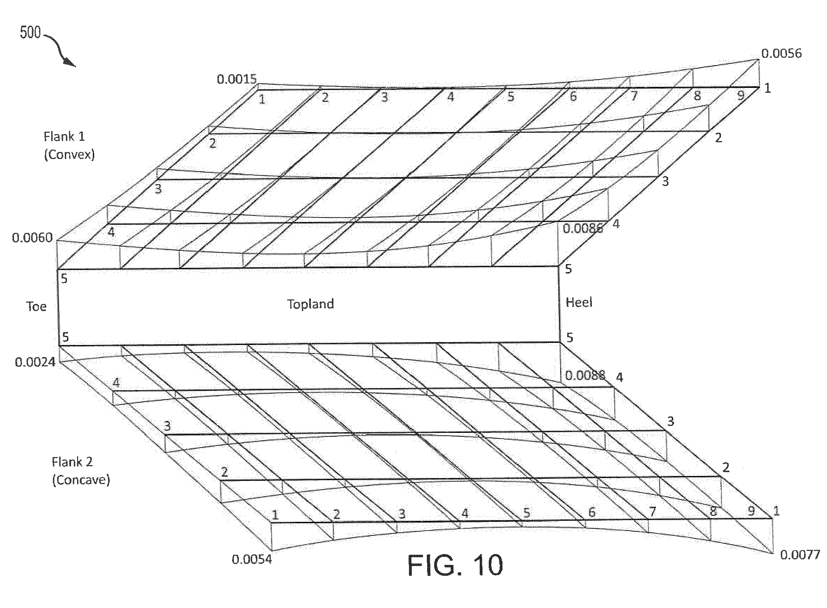

Referring now to FIG. 10, an ease-off grid illustrates the normalized tooth profile of a first gear 120 overlapped with the normalized tooth profile of a second gear 130. A profile modification is added to each contact corner to create a smooth overlapping surface. In an exemplary embodiment, the profile modifications for the concave flank (generally shown at 212) include about 0.0024 inches (about 0.0061 centimeters) at the top of the toe 144, about 0.0054 inches (about 0.0137 centimeters) at the root of the toe 144, about 0.0080 inches (about 0.02032 centimeters) at the top of the heel 146, and about 0.0077 inches (about 0.01956 centimeters) at the root of the heel 146. The profile modifications for the convex flank (generally shown at 214) may be about 0.0060 inches (about 0.0152 centimeters) at the top of the toe 144, about 0.0015 inches (about 0.0387 centimeters) at the root of the toe 144, about 0.0086 inches (about 0.0983 centimeters) at the top of the heel 146, and about 0.0056 inches (about 0.0142 centimeters) at the root of the heel 146. The profile modification at each corner may be split between the first gear and the second gear. For example, the first gear may be modified the total profile modification amount, the second gear may be modified the total profile modification amount, or the first gear and the second gear may each be modified an amount totaling the profile modification amount at that corner.

The above description details particular dimensions of gears in a set according to one embodiment. One or ordinary skill will realize that additional dimensions could be specified and the values of those could be modified without departing from the present invention. Examples of additional dimensions of the first gear 120 and the second gear 130 and their approximate values may be found in included Table 2.

**TABLE 2**

| | First Gear* | Second Gear* |
|---|---|---|
| Pitch Diameter | 4.9231" | 7.2308" |
| Outer Slot Width | 0.0736" | 0.0750" |
| Mean Slot Width | 0.0736" | 0.0750" |
| Inner Slot Width | 0.0736" | 0.0750" |
| Pitch Apex to Crown | 3.524" | 2.38" |
| Edge Radius | 0.0250" | 0.0350" |
| Maximum Allowable Edge Radius | 0.0250" | 0.0350" |
| Maximum Edge Radius Geometry | 0.0479" | 0.0479" |
| Maximum Edge Radius Mutilation | 0.0784" | 0.0810" |
| Maximum Edge Radius Interference | 0.0259" | 0.0397" |
| Crown to Crossing Point | 3.5237" | 2.3840" |

| | | |
|---|---|---|
| * (cm = " x 2.54) | | |

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A gear (120; 130) comprising:
a conical base having an inner end section and an outer end section at two different positions along a rotational axis (A₁; A₂);
a plurality of teeth (122; 132) extending from a surface of the conical base between the inner end section and the outer end section wherein each tooth (122; 132) has a root, a pitch and a face;
wherein the gear (120; 130) has an outside diameter (148; 180) of about 5.1924 inches (13.1887 cm), an outer cone distance (152; 182) of about 4.3738 inches (11.1095 cm), a face width (142) of about 1.31 inches (3.33 cm).

2. The gear according to claim 1 wherein the gear (120; 130) has a ratio of the outside diameter (148; 180) to a length parallel to the axis of rotation (A₁; A₂) between a crown and a pitch apex (140) of about 1.47.

3. The gear according to claim 1 or 2,
wherein the gear (120; 130) has an addendum (AD) of about 0.1629 inches (0.4138 cm), a dedendum (DD) of about 0.1227 inches (0.3117 cm) and a dedendum angle of about 1.26 degrees.

4. The gear according to claim 1, 2 or 3,
wherein the gear (120; 130) has a face cone (F₁; F₂), a pitch cone (P), and a root cone (R) all of which intersect with the rotational axis (A₁; A₂) of the gear (120; 130),
wherein the root cone (R) intersects the rotational axis (A₁; A₂) at about 0.0492 inches (0.125 cm) before the pitch cone (P) intersects the rotational axis (A₁; A₂) and the face cone (F₁; F₂) intersects the rotational axis (A₁; A₂) at about 0.0481 inches (0.122 cm) before the pitch cone (P) intersects the rotational axis (A₁; A₂).

5. The gear according to any preceding claim,
wherein the gear (120; 130) has a pitch angle of about 34.25 degrees, a face angle of about 36.76 degrees and a root angle of about 32.99 degrees.

6. The gear according to any preceding claim,
wherein each of the teeth (122; 132) has a mean circular thickness of about 0.2208 inches (0.5608 cm), an inner normal topland of about 0.0796 inches (0.2022 cm), an outer normal topland of about 0.0736 inches (0.1869 cm) and a mean normal topland of about 0.0756 inches (0.192 cm)

7. The gear according to any preceding claim,
wherein each of the teeth (122; 132) has an inner spiral angle (θ_{I}) of about 25.715 degrees, an outer spiral angle (θ_{O}) of about 32.753 degrees and a mean spiral angle (θ_{M}) of 29 degrees.

8. The gear according to any preceding claim, wherein the gear (120; 130) comprises 32 teeth.

9. A gear (120; 130) comprising:
a generally conical base having an inner end section and an outer end section at two different positions along a rotational axis (A₁; A₂);
a plurality of teeth (122; 132) extending from the surface of the base between the inner end section and the outer end section, wherein each tooth (122; 132) has a root, a pitch and a face;
wherein the gear (120; 130) has an outside diameter (148; 180) of about 3.1956 inches (8.1168 cm), an outer cone distance (152; 182) of about 2.1044 inches (5.3452 cm), a face width (142) of about 0.62 inches (1.57 cm).

10. The gear according to claim 9,
wherein the gear (120; 130) has a ratio of the outside diameter (148; 180) to a length (150) parallel to the axis of rotation (A₁; A₂) between a crown and a pitch apex (140) of about 2.33.

11. The gear according to claim 9 or 10,
wherein the gear (120; 130) has an addendum (AD) of about 0.09 inches (0.2 cm), a dedendum (DD) of about 0.105 inches (0.267 cm) and a dedendum angle of about 2.83 degrees.

12. The gear according to claim 9, 10 or 11,
wherein the gear (120; 130) has a face cone (F₁; F₂), a pitch cone (P), and a root cone (R) all of which intersect with the rotational axis (A₁; A₂) of the gear (120; 130),
wherein the root cone (R) intersects the rotational axis (A₁; A₂) at about 0.0014 inches (0.0036 cm) before the pitch cone (P) intersects the rotational axis (A₁; A₂) and the face cone (F₁; F₂) intersects the rotational axis (A₁; A₂) at about 0.0016 inches (0.0041 cm) after the pitch cone (P) intersects the rotational axis (A₁; A₂).

13. The gear according to any of claims 9 to 12,
wherein the gear (120; 130) has a pitch angle of about 46.891 degrees, a face angle of about 49.308 degrees and a root angle of about 44.061 degrees.

14. The gear according to any of claims 9 to 13,
wherein each of the teeth (122; 132) has a mean circular thickness of about 0.1291 inches (0.3279 cm), an inner normal topland of about 0.0398 inches (0.1011 cm), an outer normal topland of about 0.0571 inches (0.1450 cm) and a mean normal topland of about 0.0526 inches (0.1336 cm).

15. The gear according to any of claims 9 to 14,
wherein each of the teeth (122; 132) has an inner spiral angle (θ_{I}) of about 18.59 degrees, an outer spiral angle (θ_{O}) of about 36.48 degrees and a mean spiral angle (θ_{M}) of about 27.5 degrees.
